# EUROPEAN PATENT SPECIFICATION

(11) **EP 2 323 502 B1**
(45) Date of publication and mention of the grant of the patent: **05.09.2012**
(21) Application number: 09781348.9
(22) Date of filing: 31.07.2009
(51) Int. Cl.: A23L 1/226, A23F 3/00

(54) **FLAVAN-3-OL CONTAINING FOODSTUFFS**
FLAVAN-3-OL-HALTIGE NAHRUNGSMITTEL
PRODUITS ALIMENTAIRES CONTENANT DU FLAVAN-3-OL

(30) Priority: 05.09.2008 EP 08163749
(43) Date of publication of application: 25.05.2011
(73) Proprietor: Unilever PLC, London Greater London EC4P 4BQ (GB); Unilever N.V., 3013 AL Rotterdam (NL)
(72) Inventor: GOUKA, Robertus, Johannes, NL-3133 AT Vlaardingen (NL); LOURBAKOS, Afrodite, NL-2334 CJ Leiden (NL)
(74) Representative: Keenan, Robert Daniel
(86) International application number: PCT/EP2009/059940
(87) International publication number: WO 2010/026003

(56) References cited:
- WO-A-99/21431
- WO-A-99/21432
- US-A- 5 336 513
- US-A- 6 042 861
- US-A1- 2004 151 790
- US-A1- 2007 059 421

## Description

### Technical field of the invention

The present invention is directed to compounds and compositions for the reduction or elimination of bitterness caused by flavan-3-ols.

### Background to the invention

Excluding water, tea is the most popular beverage consumed by man. Tea is very refreshing, can be served either hot or cold, and has been made commercially available for many years. Lipton®, for example, is the world's leading brand of tea, made available in over 110 countries by Unilever.

Today, modern scientists are exploring the exciting potential of tea, which has a unique combination of natural antioxidants known as flavonoids that can include flavan-3-ols, flavonols and flavonol glucosides. Taken regularly, tea can help improve vascular function, combat fatigue, reduce cholesterol levels and increase feelings of vitality.

Studies have found that the flavan-3-ols, such as catechins, found in tea have many health benefits and epigallocatechin gallate, epicatechin, epicatechin gallate, and epigallocatechin have been shown to positively impact physiological activities, and their use as antiallergic agents and cerebral function activators has been proposed.

In view of the many positive contributions associated with flavan-3-ols, it is desirable to formulate consumable compositions, such as beverages and food, with elevated levels of flavan-3-ols. Unfortunately, increased amounts of flavan-3-ols can lead to end use products that can have poor organoleptic properties, in particular bitter taste.

US 2003/0096050 discloses a food composition containing catechins (i.e. flavan-3-ols) and gallic acid wherein the gallic acid is alleged to have a certain bitterness mitigating effect. There is therefore a need for consumable compositions with elevated levels of flavan-3-ols with improved bitterness reduction. Additional state of the art dealing with bitterness reduction is provided by US 5,336,513 and US 2007/0059421.

### Definitions

### Flavan-3-ols

As used herein the term "flavan-3-ols" is used as a generic term for catechins, theaflavins, thearubigins, and mixtures thereof.

### Catechins

As used herein the term "catechins" is used as a generic term for catechin, gallocatechin, catechin gallate, gallocatechin gallate, epicatechin, epigallocatechin, epicatechin gallate, epigallocatechin gallate, and mixtures thereof.

### Theaflavins

As used herein the term "theaflavins" is used as a generic term for theaflavin, isotheaflavin, neotheaflavin, theaflavin-3-gallate, theaflavin-3'-gallate, theaflavin-3,3'-digallate, epitheaflavic acid, epitheaflavic acid-3'-gallate, theaflavic acid, theaflavic acid-3'-gallate and mixtures thereof. The structures of these compounds are well-known (see, for example, structures xi-xx in Chapter 17 of "Tea - Cultivation to consumption", K.C. Willson and M.N. Clifford (Eds), 1992, Chapman & Hall, London, pp.555-601). The term theaflavins includes salt forms of these compounds. The preferred theaflavins are theaflavin, theaflavin-3-gallate, theaflavin-3'-gallate, theaflavin-3,3'-digallate and mixtures thereof, as these theaflavins are most abundant in natural sources, such as black tea.

### Beverage

As used herein the term "beverage" refers to a substantially aqueous drinkable composition suitable for human consumption. Preferably the beverage comprises at least 85% water by weight of the beverage, more preferably at least 90% and most preferably from 95 to 99.9%.

### Tea solids

As used herein, the term "tea solids" refers to dry material extractable from the leaves of the plant *Camellia sinensis* var. *sinensis* and/or *Camellia sinensis* var. *assamica.* The material may have been subjected to a so-called "fermentation" step wherein it is oxidised by certain endogenous enzymes that are released during the early stages of "black tea" manufacture. This oxidation may even be supplemented by the action of exogenous enzymes such as oxidases, laccases and peroxidases. Alternatively the material may have been partially fermented ("oolong" tea) or substantially unfermented ("green tea").

### Tea-based beverage

As used herein, the term "tea-based beverage" refers to a beverage comprising at least 0.01% by weight tea solids. Preferably the tea-based beverage comprises from 0.04 to 3% by weight tea solids, more preferably from 0.06 to 2%, most preferably from 0.1 to 1%.

### Elevated levels of flavan-3-ols

As used herein, the term "elevated levels of flavan-3-ols" refers to compositions comprising at least 0.01 wt% flavan-3-ols.

### Effective amount

As used herein, the term "effective amount" refers to at least 0.01 wt% of the compound or compounds for the reduction or elimination of bitterness caused by flavan-3-ols.

### Comprising

The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

### Brief description of the invention

We have now found that bitterness in consumable compositions with elevated levels of flavan-3-ols may be eliminated through the use of particular compounds. Accordingly, in a first aspect, the present invention provides the use of a compound of formula (I): 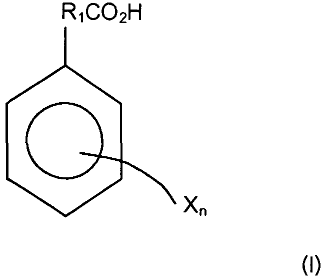 for the reduction or elimination of bitterness caused by flavan-3-ols, wherein
R₁ represents C₂ - C₃ saturated or unsaturated divalent hydrocarbon radical,
n is an integer from 0 to 3, and
each X is independently selected from C₁ - C₃ alkyloxy and OH;
and wherein if n is 0 then R₁ is C₃ saturated divalent hydrocarbon radical or C₂ - C₃ unsaturated divalent hydrocarbon radical;
and wherein if n is greater than 0 then the compound has formula (II) 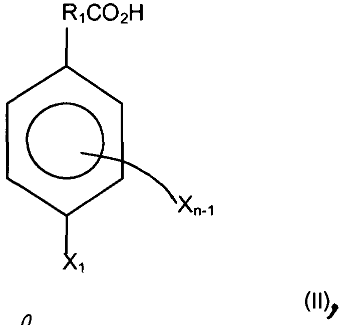 wherein said compound of formula (I) is one or more of
4-Phenylbutanoic acid,
3-(3,4,5-trimethoxyphenyl)propanoic acid,
3,4,5-trimethoxycinnamic acid,
3-(4-methoxyphenyl)propanoic acid,
4-methoxycinnamic acid,
2,4-dimethoxycinnamic acid,
3-(3,4-dimethoxyphenyl)propanoic acid,
3,4-dimethoxycinnamic acid,
3-(3,4-dihydroxyphenyl)propanoic acid, and
3-(3-methoxy-4-hydroxyphenyl)propanoic acid.

We have conducted extensive research into the physiological origin of bitterness from flavan-3-ols. The human tongue perceives bitterness via a family of about 25 related receptors, each of which detects a different set of bitter tasting molecules. Without wishing to be bound by theory, we believe that the bitter taste of flavan-3-ols is caused by the activation of a specific receptor, TAS2R39, by flavan-3-ols. Furthermore, we have found that compounds of formula (I) specifically bind to receptor TAS2R39 and antagonise its activation. Hence compounds according to the invention block or reduce the activation of receptor TAS2R39 by flavan-3-ols and the bitter taste of the flavan-3-ols is alleviated. More specifically, compounds according to formula (I) are more effective at blocking TAS2R39 than gallic acid.

In a second aspect, the present invention provides a composition comprising greater than 0.01 wt % flavan-3-ols and an effective amount of at least one compound of formula (I). An advantage of this aspect of the present invention is that such a composition will allow consumers to reach the required intake of flavan-3-ols with fewer servings of, for example, a high-flavan-3-ol tea without the aversive effects of enhanced bitterness that this would normally introduce.

In a third aspect, the present invention provides a method of manufacturing the composition, the method comprising the steps of: providing a first substance comprising flavan-3-ols and a second substance comprising the at least one compound of formula (I), combining the two substances, and recovering the composition.

In a final aspect, the present invention provides a method for the reduction or elimination of bitterness caused by flavan-3-ols comprising consuming a first substance and a second substance, simultaneously or sequentially, wherein the first substance comprises flavan-3-ols and the second substance comprises an effective amount of at least one compound of formula (I).

### Detailed description of the invention

The present invention is directed to consumable compositions that contain high levels of flavan-3-ols in which the bitter taste of the flavan-3-ols is reduced.

The present invention provides for the use of a compound of formula (I) that is more effective at blocking flavan-3-ol bitterness. The compound is particularly effective at blocking the bitter taste of catechins and hence a preferred use is for blocking bitterness caused by catechins. Especially effective, and thus preferred compounds, are those wherein each X of formula (I) is independently selected from methoxy and OH. Alternatively preferred compounds are those wherein if n of formula (I) is 0 then R₁ is C₂ unsaturated divalent hydrocarbon radical or C₃ saturated divalent hydrocarbon radical. The compounds of formula (I) are:
4-Phenylbutanoic acid,
3-(3,4,5-trimethoxyphenyl)propanoic acid,
3,4,5-trimethoxycinnamic acid,
3-(4-methoxyphenyl)propanoic acid,
4-methoxycinnamic acid,
2,4-dimethoxycinnamic acid,
3-(3,4-dimethoxyphenyl)propanoic acid,
3,4-dimethoxycinnamic acid,
3-(3,4-dihydroxyphenyl)propanoic acid,
3-(3-methoxy-4-hydroxyphenyl)propanoic acid,
and mixtures thereof.

The present invention also provides for a composition comprising greater than 0.01 wt% flavan-3-ols, preferably greater than 0.02 wt% flavan-3-ols, more preferably greater than 0.05 wt% flavan-3-ols and an effective amount of at least one compound of formula (I). Preferably, the flavan-3-ols are one or more catechins. The amount of the compound is typically at least 0.05 wt%, more preferably at least 0.075 wt%, most preferably at least 0.1 wt%. The amount of the compound is typically at most 1.5 wt%, more preferably at most 0.75 wt%, most preferably at most 0.25 wt%. The preferred form of the composition is a food, more preferably a beverage, most preferably a tea-based beverage. The compound of formula (I) is one or more of: 4-Phenylbutanoic acid, 3-(3,4,5-trimethoxyphenyl)propanoic acid, 3,4,5-trimethoxycinnamic acid, 3-(4-methoxyphenyl)propanoic acid, 4-methoxycinnamic acid, 2,4-dimethoxycinnamic acid, 3-(3,4-dimethoxyphenyl)propanoic acid, 3,4-dimethoxycinnamic acid, 3-(3,4-dihydroxyphenyl)propanoic acid, and 3-(3-methoxy-4-hydroxyphenyl)propanoic acid.

The present invention further provides a method of manufacturing the composition, the method comprising the steps of: providing a first substance comprising flavan-3-ols and a second substance comprising the at least one compound of formula (I), combining the two substances, and recovering the composition. Preferably, the first substance comprises catechins.

The present invention finally provides a method for the reduction or elimination of bitterness caused by flavan-3-ols comprising consuming a first substance and a second substance wherein the first substance comprises flavan-3-ols and the second substance comprises an effective amount of at least one compound of formula (I). Preferably, the first substance comprises catechins. Preferably the first and second substances are consumed simultaneously as part of the same meal, more preferably the first and second substances are consumed simultaneously in the same composition. Alternatively the first and second substances are consumed sequentially, most preferably when consumed sequentially, the first substance is consumed after the second substance.

### Example 1

### Evaluation of TSA2R39 inhibitors

Activation of the bitter receptor TAS2R39 causes the release of calcium from the endoplasmic reticulum of those cells containing the receptor. Therefore, changes in calcium levels within cells expressing TAS2R39 serves as a proxy marker for the activity of the receptor. An assay was used to assess the stimulation of TAS2R39 by the flavan-3-ol epicatechin gallate (ECG) and to assess the inhibition of this stimulation of TAS2R39 through the use of various compounds as follows:
HEK293 cells expressing the human bitter receptor TAS2R39 and a G-protein that allows coupling to a calcium readout system were maintained in Dulbecco's Modified Eagle's Medium (DMEM) containing DMEM and 10% tetracycline-free fetal bovine serum (Cambrex) supplemented with blasticidin (5 µg/ml) geneticin (400 µg/ml) and hygromycin (100 µg/ml). Cells were grown and maintained at 37°C / 5% CO₂.

Cells were cultured in a 75 cm² flask, harvested by trypsinisation and resuspended in DMEM medium. 100 µl of cells per well were added to a poly-L-lysine coated µclear 96-well plate, and incubated overnight. Expression of the TAS2R39 gene was then induced by the addition of 100 µl DMEM medium containing 0.5 µg/ml doxycyclin. After another 24-30 hrs the medium was removed and the cells were loaded for 1 hour with 50 µl Tyrodes buffer (140 mM NaCl, 5 mM KCI, 10 mM glucose, 1 mM CaCl₂. 2 H₂O, 1 mM MgCl₂. 6 H₂O, 20 mM HEPES pH 7.4 (Sigma P8761)) containing 2.5 µM of the fluorescent marker of calcium, Fluo-4-AM, followed by a 1-hr incubation at 37°C. The cells were then washed with Tyrodes buffer and finally taken up in 100 µl Tyrodes buffer.

Test solutions containing 0.5mM ECG and 10mM of the test compounds, dissolved in Tyrodes buffer, were prepared and 100 µl of each test solution was added to the wells of the 96-well plate containing the cells. A comparative solution containing only 0.5mM ECG dissolved in Tyrodes buffer was also prepared and 100 µl was added to a well of the 96-well plate containing the cells.

Intracellular calcium levels were monitored using a Flexstation II 384. The 96-well plate was loaded onto the Flexstation II 384 and fluorescence measurements were carried out at 37°C at an excitation wavelength of 485nm and an emission wavelength of 520nm. Activity of TAS2R39 was measured as the change in fluorescence (ΔF) which was calculated by subtracting the maximum fluorescence after the addition of the test or comparative solution from the baseline fluorescence measured before addition of the test or comparative solution.

Inhibition of TAS2R39 activity was measured as the percentage reduction of ΔF in the presence of ECG alone, compared to ΔF in the presence of ECG plus a test compound. The test compounds, their structures and the percentage inhibition of TAS2R39 activity is given in the following table. 3,4,5-trihydroxybenzoic acid (gallic acid) was included in the selection of the test compounds.

**Table 1 - Inhibition of TAS2R39 activity**

| **Test compound** | **Structure of test compound** | **% inhibition of TAS2R39** |
|---|---|---|
| Benzoic acid | 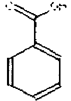 | 20% |
| Phenylacetic acid | 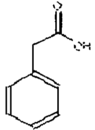 | 5% |
| 3-phenylpropanoic acid | 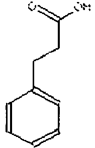 | 15% |
| 3-phenyl propenoic acid (Cinnamic acid) | 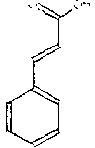 | 40% |
| 4-phenylbutanoic acid | 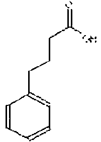 | 40% |
| 3,4,5-trimethoxybenzoic acid | 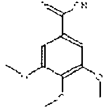 | 20% |
| 3,4,5-trimethoxyphenylacetic acid | 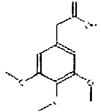 | 25% |
| 3-(3,4,5-trimethoxyphenyl)propanoic acid | 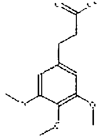 | 35% |
| 3,4,5-trimethoxycinnamic acid | 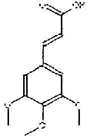 | 70% |
| 2-methoxybenzoic acid | 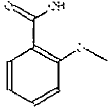 | 10% |
| 2-methoxycinnamic acid | 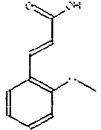 | 0% |
| 3-methoxybenzoic acid | 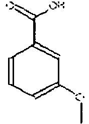 | 5% |
| 3-methoxycinnamic acid | 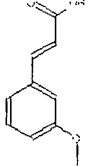 | 0% |
| 4-methoxybenzoic acid | 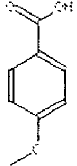 | 15% |
| 4-methoxyphenylacetic acid | 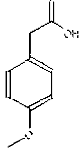 | 15% |
| 3-(4-methoxyphenyl)propanoic acid | 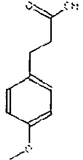 | 40% |
| 4-methoxycinnamic acid | 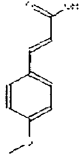 | 30% |
| 2,4-dimethoxycinnamic acid | 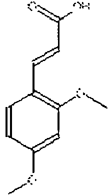 | 40% |
| 3,4-dimethoxybenzoic acid | 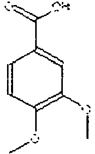 | 10% |
| 3-(3,4-dimethoxyphenyl)propanoic acid | 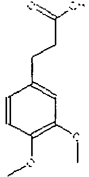 | 35% |
| 3,4-dimethoxycinnamic acid | 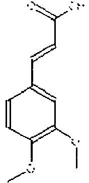 | 45% |
| 3,5-dimethoxycinnamic acid | 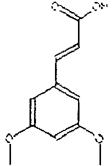 | 20% |
| 4-hydroxybenzoic acid | 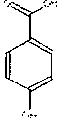 | 25% |
| 4-hydroxyphenylacetic acid | 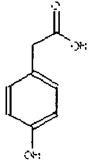 | 20% |
| 3-(4-hydroxyphenyl)propanoic acid | 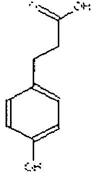 | 25% |
| 4-hydroxycinnamic acid | 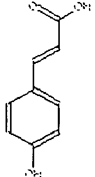 | 40% |
| 3,4-dihydroxybenzoic acid | 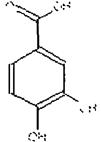 | 15% |
| 3,4-dihydroxyphenylacetic acid | 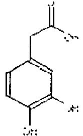 | 15% |
| 3-(3,4-dihydroxyphenyl)propanoic acid | 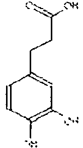 | 30% |
| 3,4-dihydroxycinnamic acid | 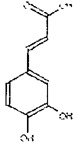 | 30% |
| 3,4,5-trihydroxybenzoic acid (gallic acid) | 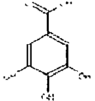 | 25% |
| 2-hydroxy-3-methoxybenzoic acid | 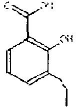 | 25% |
| 3-(3-methoxy-4-hydroxyphenyl) propanoic acid | 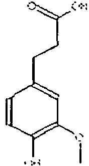 | 35% |
| 3-methoxy-4-hydroxycinnamic acid | 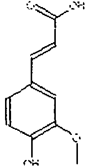 | 65% |
| 4-hydroxy-3,5-dimethoxycinnamic acid | 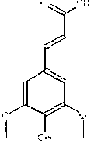 | 65% |
| Phenylalanine | 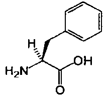 | 0% |

It can clearly be seen that although the test compounds share similar basic moieties, their ability to inhibit the bitter receptor TAS2R39 is varied. Only those compounds according to formula (I) are better than gallic acid. In particular, the results above demonstrate that compounds according to formula I, such as Cinnamic acid, 4-Phenylbutanoic acid, 3-(3,4,5-trimethoxyphenyl)propanoic acid, 3,4,5-trimethoxycinnamic acid, 3-(4-methoxyphenyl)propanoic acid, 4-methoxycinnamic acid, 2,4-dimethoxycinnamic acid, 3-(3,4-dimethoxyphenyl)propanoic acid, 3,4-dimethoxycinnamic acid, 4-hydroxycinnamic acid, 3-(3,4-dihydroxyphenyl)propanoic acid, 3,4-dihydroxycinnamic acid, 3-(3-methoxy-4-hydroxyphenyl)propanoic acid, 3-methoxy-4-hydroxycinnamic acid and 4-hydroxy-3,5-dimethoxycinnamic acid, are more effective inhibitors of TAS2R39 than gallic acid.

## Claims

1. Use of a compound wherein the compound is one or more of:
4-Phenylbutanoic acid,
3-(3,4,5-trimethoxyphenyl)propanoic acid,
3,4,5-trimethoxycinnamic acid,
3-(4-methoxyphenyl)propanoic acid,
4-methoxycinnamic acid,
2,4-dimethoxycinnamic acid,
3-(3,4-dimethoxyphenyl)propanoic acid,
3,4-dimethoxycinnamic acid,
3-(3,4-dihydroxyphenyl)propanoic acid, and
3-(3-methoxy-4-hydroxyphenyl)propanoic acid,
for the reduction or elimination of bitterness caused by flavan-3-ols.

2. Use according to claim 1 wherein, the bitterness is caused by catechins.

3. A composition comprising greater than 0.01 wt % flavan-3-ols and an effective amount of at least one compound wherein the at least one compound is one or more of:
4-Phenylbutanoic acid,
3-(3,4,5-trimethoxyphenyl)propanoic acid,
3,4,5-trimethoxycinnamic acid,
3-(4-methoxyphenyl)propanoic acid,
4-methoxycinnamic acid,
2,4-dimethoxycinnamic acid,
3-(3,4-dimethoxyphenyl)propanoic acid,
3,4-dimethoxycinnamic acid,
3-(3,4-dihydroxyphenyl)propanoic acid, and
3-(3-methoxy-4-hydroxyphenyl)propanoic acid.

4. A composition according to claim 3 comprising at least 0.05 wt % flavan-3-ols.

5. A composition according to claim 3 or claim 4 wherein the flavan-3-ols are one or more catechins.

6. A composition according to any one of claims 3 to 5 wherein the amount of the at least one compound is from 0.05 to 1.5 wt%.

7. A composition according to any one of claims 3 to 6 wherein the composition is a beverage, preferably a tea-based beverage.

8. A method of manufacturing a composition according to any one of claims 3 to 7, the method comprising the steps of: providing a first substance comprising flavan-3-ols and a second substance comprising the at least one compound, combining the two substances, and recovering the composition.

9. A method according to claim 8 wherein the first substance comprises one or more catechins.

10. A method for the reduction or elimination of bitterness caused by flavan-3-ols comprising consuming a first substance and a second substance, simultaneously or sequentially, wherein the first substance comprises flavan-3-ols and the second substance comprises an effective amount of at least one compound wherein the at least one compound is one or more of:
4-Phenylbutanoic acid,
3-(3,4,5-trimethoxyphenyl)propanoic acid,
3,4,5-trimethoxycinnamic add,
3-(4-methoxyphenyl)propanoic acid,
4-methoxycinnamic add,
2,4-dimethoxycinnamic acid,
3-(3,4-dimethoxyphenyl)propanoic acid,
3,4-dimethoxycinnamic acid,
3-(3,4-dihydroxyphenyl)propanoic acid, and
3-(3-methoxy-4-hydroxyphenyl)propanoic acid.

11. A method according to claim 10 wherein the first substance comprises one or more catechins.

## Patentansprüche

1. Verwendung einer Verbindung, wobei die Verbindung eine oder mehrere der folgenden ist:
4-Phenylbutansäure,
3-(3,4,5-Trimethoxyphenyl)propansäure,
3,4,5-Trimethoxycinnamonsäure,
3-(4-Methoxyphenyl)propansäure,
4-Methoxycinnamonsäure,
2,4-Dimethoxycinnamonsäure,
3-(3,4-Dimethoxyphenyl)propansäure,
3,4-Dimethoxycinnamonsäure,
3-(3,4-Dihydroxyphenyl)propansäure und
3-(3-Methoxy-4-hydroxyphenyl)propansäure
für die Verringerung oder Beseitigung der Bitterkeit, die durch Flavan-3-ole hervorgerufen wird.

2. Verwendung nach Anspruch 1,
wobei die Bitterkeit durch Catechine hervorgerufen wird.

3. Zusammensetzung, die mehr als 0,01 Gew.-% Flavan-3-ole und eine wirksame Menge von zumindest einer Verbindung aufweist,
wobei die zumindest eine Verbindung einer oder mehrere der folgenden ist:
4-Phenylbutansäure,
3-(3,4,5-Trimethoxyphenyl)propansäure,
3,4,5-Trimethoxycinnamonsäure,
3-(4-Methoxyphenyl)propansäure,
4-Methoxycinnamonsäure,
2,4-Dimethoxycinnamonsäure,
3-(3,4-Dimethoxyphenyl)propansäure,
3,4-Dimethoxycinnamonsäure,
3-(3,4-Dihydroxyphenyl)propansäure und
3-(3-Methoxy-4-hydroxyphenyl)propansäure.

4. Zusammensetzung nach Anspruch 3,
die mindestens 0,05 Gew.-% Flavan-3-ole aufweist.

5. Zusammensetzung nach Anspruch 3 oder 4,
wobei die Flavan-3-ole ein oder mehrere Catechine sind.

6. Zusammensetzung nach einem der Ansprüche 3 bis 5,
wobei die Menge der zumindest einen Verbindung 0,05 bis 1,5 Gew.-% beträgt.

7. Zusammensetzung nach einem der Ansprüche 3 bis 6,
wobei die Zusammensetzung ein Getränk, vorzugsweise ein auf Tee basierendes Getränk ist.

8. Verfahren zum Herstellen einer Zusammensetzung nach einem der Ansprüche 3 bis 7,
wobei das Verfahren die folgenden Schritte aufweist:
Bereitstellen einer ersten Substanz, die Flavan-3-ole aufweist, und einer zweiten Substanz, die die zumindest eine Verbindung aufweist, Mischen der beiden Substanzen und Gewinnen der Zusammensetzung.

9. Verfahren nach Anspruch 8,
wobei die erste Substanz ein oder mehrere Catechine aufweist.

10. Verfahren zur Verringerung oder Beseitigung der Bitterkeit, die durch Flavan-3-ole hervorgerufen wird,
das das Aufnehmen einer ersten Substanz und einer zweiten Substanz gleichzeitig oder nacheinander aufweist, wobei die erste Substanz Flavan-3-ole aufweist und die zweite Substanz eine wirksame Menge von zumindest einer Verbindung aufweist, wobei die zumindest eine Verbindung eine oder mehrere der folgenden ist:
4-Phenylbutansäure,
3-(3,4,5-Trimethoxyphenyl)propansäure,
3,4,5-Trimethoxycinnamonsäure,
3-(4-Methoxyphenyl)propansäure,
4-Methoxycinnamonsäure,
2,4-Dimethoxycinnamonsäure,
3-(3,4-Dimethoxyphenyl)propansäure,
3,4-Dimethoxycinnamonsäure,
3-(3,4-Dihydroxyphenyl)propansäure und
3-(3-Methoxy-4-hydroxyphenyl)propansäure.

11. Verfahren nach Anspruch 10,
wobei die erste Substanz ein oder mehrere Catechine aufweist.

## Revendications

1. Utilisation d'un composé, dans laquelle le composé est un ou plusieurs éléments parmi :
l'acide 4-phénylbutanoïque,
l'acide 3-(3,4,5-triméthoxyphényl)propanoïque,
l'acide 3,4,5-triméthoxycinnamique,
l'acide 3-(4-méthoxyphényl)propanoïque,
l'acide 4-méthoxycinnamique,
l'acide 2,4-diméthoxycinnamique,
l'acide 3-(3,4-diméthoxyphényl)propanoïque,
l'acide 3,4-diméthoxycinnamique,
l'acide 3-(3,4-dihydroxyphényl)propanoïque et
l'acide 3-(3-méthoxy-4-hydroxyphényl)propanoïque, pour la réduction ou l'élimination de l'amertume provoquée par des flavan-3-ols.

2. Utilisation selon la revendication 1, dans laquelle l'amertume est provoquée par des catéchines.

3. Composition comprenant plus de 0,01 % en poids de flavan-3-ols et une quantité efficace d'au moins un composé, dans laquelle l'au moins un composé est un ou plusieurs éléments parmi :
l'acide 4-phénylbutanoïque,
l'acide 3-(3,4,5-triméthoxyphényl)propanoïque,
l'acide 3,4,5-triméthoxycinnamique,
l'acide 3-(4-méthoxyphényl)propanoïque,
l'acide 4-méthoxycinnamique,
l'acide 2,4-diméthoxycinnamique,
l'acide 3-(3,4-diméthoxyphényl)propanoïque,
l'acide 3,4-diméthoxycinnamique,
l'acide 3-(3,4-dihydroxyphényl)propanoïque, et
l'acide 3-(3-méthoxy-4-hydroxyphényl)propanoïque.

4. Composition selon la revendication 3, comprenant au moins 0,05 % en poids de flavan-3-ols.

5. Composition selon la revendication 3 ou la revendication 4, dans laquelle les flavan-3-ols sont une ou plusieurs catéchines.

6. Composition selon l'une quelconque des revendications 3 à 5, dans laquelle la quantité du au moins un composé est de 0,05 à 1,5 % en poids.

7. Composition selon l'une quelconque des revendications 3 à 6, dans laquelle la composition est une boisson, de préférence une boisson à base de thé.

8. Méthode de fabrication d'une composition selon l'une quelconque des revendications 3 à 7, la méthode comprenant les étapes consistant à : fournir une première substance comprenant des flavan-3-ols et une seconde substance comprenant l'au moins un composé, combiner les deux substances et récupérer la composition.

9. Méthode selon la revendication 8, dans laquelle la première substance comprend une ou plusieurs catéchines.

10. Méthode de réduction ou d'élimination de l'amertume provoquée par des flavan-3-ols comprenant l'étape consistant à consommer une première substance et une seconde substance, simultanément ou séquentiellement, dans laquelle la première substance comprend des flavan-3-ols et la seconde substance comprend une quantité efficace d'au moins un composé, dans laquelle l'au moins un composé est un ou plusieurs éléments parmi :
l'acide 4-phénylbutanoïque,
l'acide 3-(3,4,5-triméthoxyphényl)propanoïque,
l'acide 3,4,5-triméthoxycinnamique,
l'acide 3-(4-méthoxyphényl)propanoïque,
l'acide 4-méthoxycinnamique,
l'acide 2,4-diméthoxycinnamique,
l'acide 3-(3,4-diméthoxyphényl)propanoïque,
l'acide 3,4-diméthoxycinnamique,
l'acide 3-(3,4-dihydroxyphényl)propanoïque et
l'acide 3-(3-méthoxy-4-hydroxyphényl)propanoïque.

11. Méthode selon la revendication 10, dans laquelle la première substance comprend une ou plusieurs catéchines.
